# EUROPÄISCHE PATENTSCHRIFT

(11) **EP 0 530 139 B1**
(45) Veröffentlichungstag und Bekanntmachung des Hinweises auf die Patenterteilung: **27.11.1996**
(21) Anmeldenummer: 92810606.1
(22) Anmeldetag: 07.08.1992
(51) Int. Cl.: C08K 5/5373, C10M 137/12

(54) **Zusammensetzungen enthaltend mit Phosphonatgruppen substituierte N-Heterozyklen mit 6 Ringgliedern**
Compositions containing 6-numbered N-heterocyclic compounds substituted with phosphonate groups
Compositions contenant d'un N-hétérocycle à 6 chaînons substitué des groupes phosphonates

(30) Priorität: 16.08.1991 CH 2430/91
(43) Veröffentlichungstag der Anmeldung: 03.03.1993
(73) Patentinhaber: CIBA-GEIGY AG, 4002 Basel (CH)
(72) Erfinder: Nesvadba, Peter, Dr., CH-1723 Marly (CH)

(56) Entgegenhaltungen:
- DE-A- 4 039 792
- US-A- 3 766 197
- US-A- 3 816 428
- US-A- 3 888 627

## Beschreibung

Die Erfindung betrifft Zusammensetzungen, enthaltend ein thermischen, oxidativen und/oder lichtinduzierten Abbau empfindliches organisches Material ausgewählt aus natürlichen, halbsynthetischen oder synthetischen Polymeren, Schmierstoffen, Metallbearbeitungsflüssigkeiten oder Hydraulikflüssigkeiten und mindestens eine mit Phosphonatgruppen substituierte Dihydro-N-heterozyklische Verbindung sowie die Verwendung dieser Verbindungen.

Als Biozide und Korrosionshemmstoffe sind Verbindungen bekannt, welche die Strukturelemente 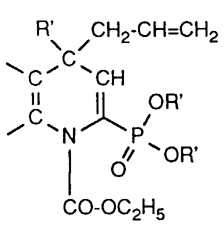 (JP-A-6 1221-193), 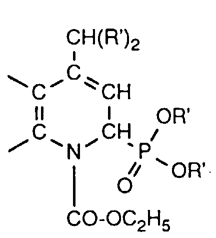 (JP-A-6 1221-192; JP-A- 6 1221-102), 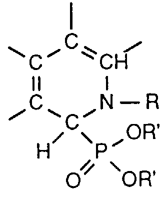 (US-A-3,766,197, US-A 3,694,144, US-A 3,809,694, US-A 3,816,428, US-A 3,830,815) und 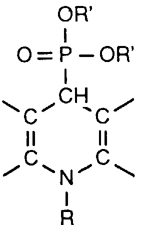 (z.B. US-A-3,816,428) enthalten. Dabei bedeuten R Wasserstoff, (Cyclo)alkyl, Aryl, Aralkyl oder Alkaryl, R' Niederalkyl, und die freien Valenzen an den C-Atomen sind mit Wasserstoff oder organischen Resten gesättigt. Zusätzlich können je zwei nebeneinanderliegende C-Atome mit freien Valenzen zusammen Teil eines ggf. substituierten, aromatischen C-Sechsrings sein.

Überraschenderweise wurde nun gefunden, daß Verbindungen mit solchen Gruppen auch vorteilhaft als Stabilisatoren zum Schutz von organischem Material, insbesondere als Verarbeitungsstabilisatoren für Polymere und als Antioxidantien für funktionelle Flüssigkeiten, eingesetzt werden können.

Die Erfindung betrifft daher Zusammensetzungen, enthaltend
A) ein gegen thermischen, oxidativen oder lichtinduzierten Abbau empfindliches organisches Material ausgewählt aus natürlichen, halbsynthetischen oder synthetischen Polymeren, Schmierstoffen, Metallbearbeitungsflüssigkeiten oder Hydraulikflüssigkeiten
B) mindestens eine Verbindung der Formel I oder/und II, 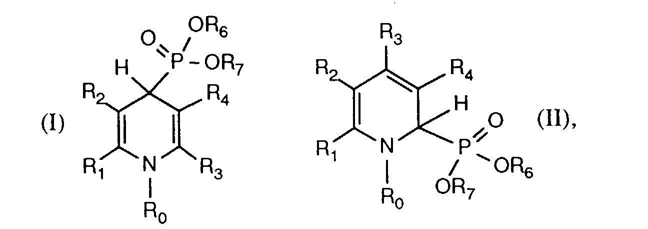 worin
   R₀ Wasserstoff, C₁-C₁₂-Alkyl, C₅-C₁₂-Cycloalkyl, C₂-C₁₂-Alkenyl, Phenyl-C₁-C₄-Alkyl, -CO-R₅ oder -CO-OR₅ ist,
   R₁ Wasserstoff, Methyl, Ethyl oder zusammen mit 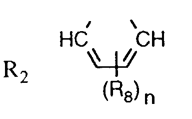 bedeutet,
   R₂ Wasserstoff, Methyl, Ethyl oder zusammen mit 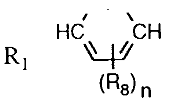 ist,
   R₃ Wasserstoff, Methyl, Ethyl oder zusammen mit 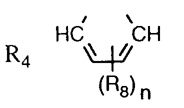 bedeutet,
   R₄ Wasserstoff, Methyl, Ethyl oder zusammen mit 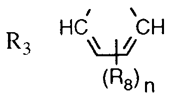 ist,
   R₅ C₁-C₁₈-Alkyl, C₅-C₁₂-Cycloalkyl, Phenyl-C₁-C₄-Alkyl oder Phenyl ist
   R₆ und R₇ unabhängig- voneinander Wasserstoff, C₁-C₁₂-Alkyl, C₅-C₁₂-Cycloalkyl, Phenyl oder Phenyl-C₁-C₄-Alkyl bedeuten,
   R₈ C₁-C₄-Alkyl ist und
   n für 0, 1 oder 2 steht.

In den Verbindungen der Formeln I und II ist R₀ vorzugsweise von Wasserstoff verschieden.

Stellen R₀, R₆ und R₇ C₁-C₁₂-Alkyl dar, so handelt es sich dabei um verzweigte oder unverzweigte Reste. Beispiele hierfür sind Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl, Decyl, Undecyl, Dodecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl oder 1-Methylundecyl; bevorzugt sind Alkylreste mit 1-4 C-Atomen. Beispiele dafür sind obiger Liste zu entnehmen. Dies gilt auch für R₅ und R₈ als C₁-C₄-Alkyl, R₅ als C₁-C₁₈-Alkyl kann zusätzlich noch z.B. Tridecyl, Tetradecyl, Pentadecyl, Hexadecyl, Heptadecyl oder Octadecyl bedeuten.
R₈ ist vorzugsweise Methyl.

R₀, R₅, R₆ und R₇ als C₅-C₁₂-Cycloalkyl können z.B. Cyclopentyl, Cyclohexyl, Cycloheptyl, Cyclooctyl oder Cyclododecyl sein. Cyclopentyl und Cyclohexyl sind bevorzugt, insbesondere Cyclohexyl.

R₀ als C₂-C₁₂-Alkenyl kann verzweigt oder unverzweigt sein und beispielsweise Vinyl, Allyl, 2-Methallyl, Hexenyl oder Undecenyl bedeuten.

In Formel II bedeuten R₀ und R₅ vorzugsweise sterisch wenig anspruchsvolle Gruppen, d.h. R₀ insbesondere Wasserstoff und lineares C₁-C₄-Alkyl und R₅ besonders lineares C₁-C₄Alkyl.

R₀, R₅, R₆, und R₇ als Phenyl-C₁-C₄-alkyl bedeuten z.B. Benzyl, Phenethyl, 3-Phenylpropyl, α-Methylbenzyl oder α,α-Dimethylbenzyl. Bevorzugt ist Benzyl.

Bevorzugt sind Zusammensetzungen, worin in Formel II R₁ und R₂ unabhängig voneinander Wasserstoff, Methyl oder Ethyl sind,
ferner Zusammensetzungen, worin in Formel II R₁ und R₂ Wasserstoff sind, R₃ Methyl oder Ethyl und R₄ Wasserstoff, Methyl oder Ethyl ist oder R₃ und R₄ zusammen 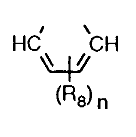 bedeuten,
des weiteren Zusammensetzungen, worin in einer Gruppe der Formel 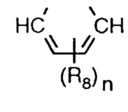 R₈ Wasserstoff ist,
fürderhin Zusammensetzungen, worin R₆ und R₇ C₁-C₆-Alkyl, Cyclohexyl, Phenyl oder Benzyl sind,
insbesondere Zusammensetzungen, worin R₀ C₁-C₄-Alkyl, -CO-R₅ oder -CO-OR₅ ist, R₁, R₂, R₃ und R₄ unabhängig voneinander Wasserstoff, Methyl oder Ethyl oder R₁ und R₂ beziehungsweise R₃ und R₄ jeweils zusammen 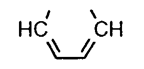 bedeuten, oder in Formel II R₁ und R₂ Wasserstoff, Methyl oder Ethyl und R₃ Methyl oder Ethyl und R₄ Wasserstoff, Methyl oder Ethyl oder R₃ und R₄ zusammen 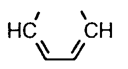 bedeuten,
R₅ C₁-C₄-alkyl ist, und
R₆ und R₇ unabhängig voneinander C₁-C₄-Alkyl, bedeuten, sowie Zusammensetzungen, worin die Komponente B) mindestens eine Verbindung der Formel I ist.

Die Verbindungen der Formel I bzw. II können als Stabilisatoren gegen lichtinduzierten, thermischen oder/und oxidativen Abbau für natürliche, halbsynthetische oder synthetische Polymere, besonders thermoplastische Kunststoffe und Elastomere, sowie für organische Schmierstoffe, organische Metallbearbeitungs- und Hydraulikflüssigkeiten, eingesetzt werden. Beispiele für solche Stoffe und Gemische sind der folgenden Aufzählung von geeigneten Materialien zu entnehmen.
1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.
   3a. Statistische oder alternierende Copolymere von α-Olefinen mit Kohlenmonoxid.
   3b. Kohlenwasserstoffharze (z.B. C₅-C₉) inklusive hydrierte Modifikationen davon (z.B. Klebrigmacherharze).
4. Polystyrol, Poly-(p-methylstyrol), Poly-(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
28. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wäßrige Emulsionen.
29. Wäßrige Emulsionen natürlicher oder synthetischer Kautschuke, wie z.B. Naturkautschuk-Latex oder Latices von carboxylierten Styrol-Butadien-Copolymeren.

In den erfindungsgemäßen Zusammensetzungen sind die Verbindungen der Formel I bzw II zweckmäßig zu 0.01 bis 10, beispielsweise zu 0.05 bis 5, vorzugsweise zu 0.05 bis 3, insbesondere jedoch zu 0.1 bis 2 Gew.-% enthalten. Es kann sich dabei um eine oder mehrere dieser Verbindungen der Formel I bzw. II handeln, und die Gewichtsprozentangaben beziehen sich auf die gesamte Menge dieser Verbindungen. Berechnungsgrundlage ist dabei das Gesamtgewicht des organischen Materials ohne die Verbindungen der Formel I bzw. II.

Die Einarbeitung in die Materialien kann beispielsweise durch Einmischen oder Aufbringen der Verbindungen der Formel I bzw. II und gegebenenfalls weiterer Additive nach den in der Technik üblichen Methoden erfolgen. Handelt es sich um Polymere, insbesondere synthetische Polymere, kann die Einarbeitung vor oder während der Formgebung, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der Verbindungen der Formel I bzw. II in Polymere besteht in deren Zugabe vor, während oder unmittelbar nach der Polymerisation der entsprechenden Monomeren bzw. vor der Vernetzung. Die Verbindungen der Formel I bzw. II können dabei als solche, aber auch in encapsulierter Form (z.B in Wachsen, Ölen oder Polymeren) zugesetzt werden. Im Falle der Zugabe vor oder während der Polymerisation können die Verbindungen der Formel I bzw. II auch als Regulatoren für die Kettenlänge der Polymeren (Kettenabbrecher) wirken.

Die Verbindungen der Formel I bzw. II oder Mischungen davon können auch in Form eines Masterbatches, der diese Verbindungen beispielsweise in einer Konzentration von 2,5 bis 25 Gew.-% enthält, den zu stabilisierenden Kunststoffen zugesetzt werden.

Zweckmäßig kann die Einarbeitung der Verbindungen der Formel I bzw. II nach folgenden Methoden erfolgen:
- als Emulsion oder Dispersion (z.B. zu Latices oder Emulsionspolymeren)
- Als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Erfindungsgemäße Polymerzusammensetzungen können in verschiedener Form angewendet bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Die Erfindung betrifft auch ein Verfahren zum Stabilisieren von natürlichen, halbsynthetischen oder synthetichen Polymeren, insbesondere von thermoplastischen Polymeren, Elastomeren oder organischen Schmierstoffen, organischen Metallbearbeitungs- oder Hydraulikflüssigkeiten gegen oxidativen, thermischen und/oder actinischen Abbau, dadurch gekennzeichnet, daß man diesen als Stabilisatoren Verbindungen der Formel I bzw. II zusetzt bzw. auf diese aufbringt.

Die Verbindungen der Formeln I und II sind beispielsweise auch geeignet, um Schmierstoffen verbesserte Gebrauchseigenschaften zu verleihen. Es ist dabei insbesondere auf ihre überraschend gute Wirkung als Antioxidantien hinzuweisen. Deshalb umfaßt die Erfindung auch Zusammensetzungen, enthaltend eine Schmierstoff und wenigstens eine Verbindung der allgemeinen Formel I bzw. II, wie oben beschrieben.

Die in Frage kommenden Schmierstoffe basieren beispielsweise auf mineralischen oder synthetischen Ölen oder Mischungen davon oder auf pflanzlichen und tierischen Ölen, Fetten und Wachsen. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Schmierstoffe sind insbesondere Öle und Fette, beispielsweise basierend auf einem Mineralöl. Bevorzugt sind Öle.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-α-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropan-tricaprylat oder Gemische davon, eines Tetraesters von Pentaerythrit mit einer einwertigen Säure oder mit einem Gemisch solcher Säuren, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-α-Olefine, Schmierstoffe auf Esterbasis, Phosphate, Glykole, Polyglykole und Polyalkylenglykole, sowie deren Mischungen mit Wasser.

Als pflanzliche Schmierstoffe sind die Öle, Fette und Wachse, gewonnen beispielsweise aus Oliven, Palmen, Palmkernen, Rüben, Raps, Leinen, Nüssen, Soja, Baumwolle, Ricinus, Sonnenblumen, Kürbiskernen, Kokos, Mais oder deren modifizierte Formen, z.B geschwefelte oder epoxidierte Öle, wie epoxidiertes Sojaöl, sowie Mischungen der Substanzen zu nennen. Beispiele für tierische Öle, Fette und Wachse, die als Schmierstoffe angewendet werden können, sind Talge, Fischöle, Spermöl, Klauenöl, Trane und Specköle, deren modifizierte Formen und Mischungen.

Metallbearbeitungsflüssigkeiten wie Walz-, Zieh- und Schneidöle basieren zumeist auf den oben beschriebenen Mineral- und synthetischen Ölen und können auch als Öl-in-Wasser-bzw. Wasser-in-Öl-Emulsionen vorliegen. Das gleiche gilt für Hydraulikflüssigkeiten.

Die Verbindungen der Formel I bzw. II, wie oben beschrieben, können z.B. in Mengen von 0,01 bis 10 Gew.-%, zweckmäßig in Mengen von 0,03 bis 5 Gew.-%, vorzugsweise in einer Menge von 0,05 bis 3 Gew.-% und ganz besonders bevorzugt von 0,5 bis 1,5 Gew.-%, bezogen auf die Zusammensetzung, in der Metallbearbeitungsflüssigkeit, der Hydraulikflüssigkeit oder dem Schmierstoff vorliegen.

Die Verbindungen der Formel I bzw. II können der oben genannten Flüssigkeiten auf an sich bekannte Weise beigemischt werden. Die Verbindungen sind beispielsweise in Ölen gut löslich. Es ist auch möglich, einen sogenannten Masterbatch herzustellen, der nach Maßgabe des Verbrauchs auf Einsatzkonzentrationen mit der entsprechenden Flüssigkeit verdünnt werden kann. In solchen Fällen sind auch Konzentrationen über 10 Gew.% möglich.

Zusätzlich zu den erfindungsgemäßen Verbindungen bzw. Mischungen können die erfindungsgemäßen Zusammensetzungen, insbesondere wenn sie organische, vorzugsweise synthetische, Polymere enthalten, noch weitere übliche Additive enthalten. Beispiele für solche Additive sind:
1. Antioxidantien
   1.1. Alkylierte Monophenole, z.B. 2,6-Di-tert.butyl-4-methylphenol, 2-Tert.butyl-4,6-di-methylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(a-Methylcyclohexyl)4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert.-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol, 2,6-Di-tert.-butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.
   1.4. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis-(2,6-dimethyl-4-hydroxyphenyl)-disulfid.
   1.5. Alkyliden-Bisphenole, z.B. 2,2'-Methylen-bis-(6-tertbutyl-4-methylphenol),2,2'-Methylen-bis-(6-terLbutyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tertbutylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-ter.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicydopentadien, Bis-[2-(3'-tert.butyl-2'-hydroxy-5'-methyl-benzyl)-6-tert,butyl-4-methyl-phenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.
   1.6. O-,N- und S-Benzylverbindungen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-ditert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Isooctyl-3,5-di-tert.-butyl-4-hydroxybenzyl-mercaptoacetat.
   1.7. Hydroxybenzylierte Malonate, z.B. Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.
   1.8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.
   1.9. Triazinverbindungen, z.B. 2,4-Bis-octylmercapto-6-(3,5-di-tert.-butyl-4-hydroxyanilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 2,4,6-Tris-(3,5-di-tert.-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   1.10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.
   1.12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert.Butyl-4-hydroxy-3-methylnhenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert.-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
   2.1. 2-(2'-Hydroxyphenyl)-benztriazole, wie z.B. 5'-Methyl-, 3',5'-Di-tert.butyl-, 5'-tert.-Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert,arnyl-, 3',5'-Bis-(α,α-dimethylbenzyl)-, Mischung aus 5-Chlor-3'-tert.-butyl-5'-(2-octyloxycarbonylethyl)- und 5-Chlor-3'-tert.-butyl-5'-[2-(2-ethylhexyloxy)-carbonylethyl]-, 5-Chlor-3'-tert.-butyl-5'-(2-methoxycarbonylethyl)-, 3'-tert.-Butyl-5'-(2-methoxycarbonylethyl)-, 3'-tert.-Butyl-5'-(2-octyloxycarbonylethyl)-, 3'-tert.-Butyl-5'-[2-(2-ethylhexyloxy)-carbonylethyl]-, 3'-Dodecyl-5'-methyl- und 3'-tert.-Butyl-5'-(2-isooctyloxycarbonylethyl)-2'-hydroxyphenyl-2H-benztriazol(2), 2,2'-Methylen-bis[4-(1,1,3,3-tetramethylbutyl)-6-benztriazol-2-yl-phenol]; Umesterungsprodukt von 2-[3'-tert.-Butyl-5'-(2-methoxycarbonylethyl)-2'-hydroxy-phenyl]-2H-benztriazol mit Polyethylenglycol 300; [R-CH₂CH₂-COO(CH₂)₃ 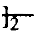 mit R=3'-tert.-Butyl-4'-hydroxy-5'-2H-benzotriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester, 3,5-Di-tert.-butyl-4-hydroxybenzoesäure-octadecylester, 3,5-Di-tert.-butyl-4-hydroxybenzoesäure-2-methyl-4,6-di-tert.-butylphenylester.
   2.4. Acrylate, wie z.B. α-Cyan-β,β-diphenylacrylsäure-ethylester bzw. -isooctylester, a-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.-Octylamino-2,6-dichlor- 1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert.-butylbenzyl)-malonat, 3-n-Octyl-7,7,9,9-tetramethyl-1,3,8-triazasprio[4.5]decan-2,4-dion, Bis-(1-octyloxy-2,2,6,6-tetramethylpiperidyl)-sebacat Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-arninopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro-[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   2.7. Oxalsäurediamide, wie z.B. 4,4'-Di-octyloxy-oxanilid, 2,2'-Di-octyloxy-5,5'-di-tert.-butyl-oxanilid, 2,2'-Di-dodecyloxy-5,5'di-tert.-butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.-butyl-4-hydroxyphenylpropionyl)-hydrazi n, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetal-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert,butylphenyl)-pentaerythritdiphosphit, Bis-(2,6-di-tert.-butyl-4-methylphenyl)-pentaerythritdiphosphit, Bis-isodecyloxy-pentaerythritdiphosphit, Bis-(2,4-di-tert.-butyl-6-methylphenyl)-pentaerythritdiphosphit, Bis-(2,4,6-tri-tert.-butylphenyl)-pentaerythritdiphsophit, Tristearyl-sorbit-triphosphit, Tetrakis-(2,4-di-tert.butylphenyl)-4,4' -biphenylen-diphosphonit, 6-Isooctyloxy-2'4,8,10-tetra-tert.-butyl-12H-dibenz[d,g]-1,3,2-dioxaphosphocin, 6-Fluor-2,4,8,10-tetra-tert.-butyl-12-methyl-dibenz[d,g]-1,3,2-dioxaphosphocin.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B. 4-tert.Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.
10. Sonstige Zusätze, wie z.B. Weichmacher, Gleitmittel, Emulgatoren, Pigmente, Optische Aufheller, Flammschutzmittel, Antistatika, Treibmittel.

Handelt es sich bei den erfindungsgemäßen Zusammensetzungen um solche auf Basis von Schmierstoffen und Hydraulikflüssigkeiten bzw. Metallbearbeitungsflüssigkeiten, können diese ebenfalls weitere Additive enthalten, die zugegeben werden, um gewisse Gebrauchseigenschaften zu verbessern, wie z.B. weitere Antioxidantien, Metalldesaktivatoren, Rostinhibitoren, Viskositäts-Index-Verbesserer, Stockpunkterniedriger, Dispergiermittel/Tenside und Verschleissschutzadditive. Beispiele hierfür sind neben den unter Punkt 1. der obigen Aufzählung genannten phenolischen Antioxidantien:
Beispiele für aminische Antioxidantien: N,N'-Di-isopropyl-p-phenylendiamin, N,N'-Di-sec-butyl-p-phenylendiamin, N,N'-Bis(1,4-dimethyl-pentyl)-p-phenylendiamin, N'N'-Bis(1-ethyl-3-methyl-pentyl)-p-phenylendiamin, N'N'-Bis(1-methyl-heptyl)p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert.-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, 2,3-Dihydro-3,3-di-methyl-4H-1,4-benzothiazin, Phenothiazin, N-Allylphenothiazin.
Beispiele für weitere Antioxidantien: Aliphatische oder aromatische Phosphite, Ester der Thiodipropionsäure oder der Thiodiessigsäure, oder Salze der Dithiocarbamid- oder Dithiophosphorsäure.
Beispiele für Metall-Desaktivatoren, z.B. für Kupfer, sind: Triazole, Benztriazole und deren Derivate, Tolutriazole und deren Derivate, 2-Mercaptobenzthiazol, 2-Mercapto-benztriazol, 2,5-Dimercaptobenztriazol, 2,5-Dimercaptobenzthiadiazol, 5,5'-Methylenbisbenztriazol, 4,5,6,7-Tetrahydrobenztriazol, Salicyliden-propylendiamin, Salicylaminoguanidin und dessen Salze.
Beispiele für Rost-Inhibitoren sind:
   a) Organische Säuren, ihre Ester, Metallsalze und Anhydride, z.B.:
      N-Oleoyl-sarcosin, Sorbitan-mono-oleat, Blei-naphthenat, Alkenylbernsteinsäureanhydrid, z.B. Dodecenylbernsteinsäure-anhydrid, -anhydrid, Alkenylbernsteinsäure-Teilester und -Teilamide, 4-Nonylphenoxy-essigsäure.
   b) Stickstoffhaltige Verbindungen, z.B.:
      i. Primäre, sekundäre oder tertiäre aliphatische oder cycloaliphatische Amine und Amin-Salze von organischen und anorganischen Säuren, z.B. öllösliche Alkylammoniumcarboxylate.
      ii. Heterocyclische Verbindungen, z.B.:
         Substituierte Imidazoline und Oxazoline.
   c) Phosphorhaltige Verbindungen, z.B.:
      Aminsalze von Phosphorsäurepartialestern oder Phosphonsäurepartialestern, Zinkdialkyldithiophosphate.
   d) Schwefelhaltige Verbindungen, z.B.:
      Barium-dinonylnaphthalin-sulfonate, Calciumpetroleum-sulfonate.
Beispiele für Viskositätsindex-Verbesserer sind: Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.
Beispiele für Stockpunkterniedriger sind: Polymethacrylat, alkylierte Naphthalinderivate.
Beispiele für Dispergiermittel/Tenside sind: Polybutenylbernsteinsäureamide oder -imide, Polybutenylphosphonsäurederivate, basische Magnesium-, Calcium-, und Bariumsulfonate und -phenolate.
Beispiele für Verschleißschutz-Additive sind: Schwefel und/oder Phosphor und/oder Halogen enthaltende Verbindungen, wie geschwefelte pflanzliche Öle, Zinkdialkyldithiophosphate, Tritolylphosphat, chlorierte Paraffine, Alkyl- und Aryldi- und tri-sulfide, Triphenylphosphorothionate, Diethanolaminomethyltolyltriazol, Di(2-ethylhexyl)aminomethyltolyltriazol.

Die vorliegende Erfindung betrifft auch die Verwendung von Verbindungen der Formel I bzw. II zum Stabilisieren von gegen oxidativen, thermischen und/oder actinischen Abbau empfindlichem organischen Material ausgewählt aus natürlichen oder (halb)synthetischen Polymeren oder Schmierstoffen oder funktionellen Flüssigkeiten, vor allem von thermoplastischen Polymeren oder Elastomeren und von Schmierstoffen. Die Verbindungen wirken beispielsweise besonders gut als Antioxidantien.

Bevorzugte Verbindungen der Formel I bzw. II führen zu bevorzugten Zusammensetzungen. Bevorzugt sind ferner Zusammensetzungen, worin die Komponente A) ein synthetisches Polymer, insbesondere ein thermoplastischer Kunststoff oder ein Elastomer, oder ein Schmierstoff oder eine Hydraulikflüssigkeit ist.

Die Herstellung der Verbindungen der Formel I bzw. II ist an sich bekannt (z. B. aus US-A 3,816,428) und erfolgt durch Umsetzung des N-"quaternierten" [z.B. des N-protonierten (Beispiel 1), N-acylierten (Beispiel 8) oder N-alkoxycarbonylierten (Beipiel 9)] Heterozyklus mit Tri- oder Dialkylphosphiten. Die Reaktion verläuft im Sinne einer Michaelis-Arbusov-Reaktion, wobei das "quaternierte" =N^{⊕}<-Salz alkylierend wirkt. Voraussetzung ist das Vorhandensein von unsubstituierten ortho- und/oder para-Positionen relativ zum Stickstoff in der unten gezeigten Formel III. Sind ortho- und para-Position verfügbar, entsteht bevorzugt das para-Phosphonat. Sperrige Substituenten am Stickstoff können die ortho-Substitution ganz verhindern. Die Reaktion kann katalytisch geführt werden, z.B. in Gegenwart von NaI. Die Reaktion verläuft gewöhnlich nach dem folgenden Schema: 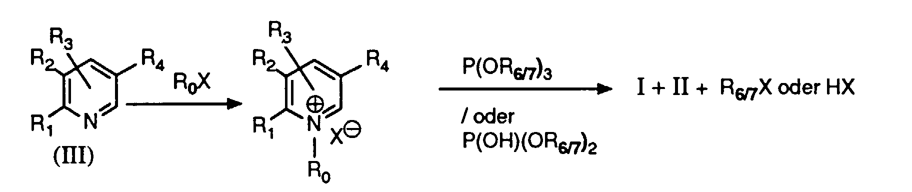 X^{⊖} bedeutet dabei das Anion einer starken Mineral- oder organischen Säure, z.B. Cl^{⊖} oder Trifluormethylsulfonat.

Die folgenden Beispiele erläutern die Erfindung weiter, ohne sie jedoch zu beschränken. Teile- und Prozentangaben beziehen sich - wie auch in der übrigen Beschreibung - sofern nicht anders angegeben, auf das Gewicht.

### Beispiel 1: Tabelle I, Verbindung 1

In einem 1 l Kolben werden 250 ml Acetonitril und 39.55 g Pyridin vorgelegt. Nach Abkühlen im Kühlbad auf -20°C werden unter Rühren 52.76 g Chlorameisensäureethylester so zugetropft, daß die Temperatur 0°C nicht übersteigt. Danach wird das halbkristalline Gemisch erneut auf -10°C abgekühlt, und man tropft 109.6 g Triisopropylphosphit wieder so zu, daß die Temperatur unter 0°C bleibt. Nach Entfernung des Kühlbades wird das Gemisch noch 3 h bei Raumtemperatur gerührt. Das Acetonitril wird am Rotationsverdampfer eingedampft und der Rückstand wird in 300 ml Methylenchlorid gelöst. Die Lösung wird mit 200 ml 1%iger Salzsäure und 100 ml Wasser gewaschen und die organische Phase über Magnesiumsulfat getrocknet. Nach Abziehen des Methylenchlorids werden durch Vakuumdestillation 136.8 g der Verbindung 1 mit einem Siedepunkt von 160-164°C/0.4 mbar erhalten

### Beispiele 2-7: Tabelle I, Verbindungen 2-7

Die Herstellung der Verbindungen 2-7 erfolgt analog Beispiel 1. Die Substitution bei Verbindung 7 folgt dem bei Isochinolinen üblichen Muster.

### Beispiel 8: Tabelle I, Verbindung 8

17.0 g N-Methylacridinium-trifluormethylsulfonat, hergestellt aus N-Methylacridin und Trifluormethansulfonsäure, und 7.5 g Natriumiodid werden in 100 ml Acetonitril suspendiert. Bei 0°C werden 6.08 ml Trimethylphosphit zugegeben, und die klare Lösung wird noch 1 h bei Raumtemperatur gerührt. Danach wird das Lösungsmittel abgezogen und der Rückstand in 100 ml Methylenchlorid aufgenommen. Die Lösung wird mit Wasser gewaschen, die organische Phase getrocknet und das Methylenchlorid abgezogen. Der Rückstand wird in Methylenchlorid-Ethylacetat (1:1) aufgenommen und über eine kurze Silikagelsäule chromatographiert. Nach Umkristallisieren aus Ethylacetat-Ether 1:1 erhält man 12 g der Verbindung 8 mit einem Schmelzpunkt von 105-107°C.

### Beispiel 9: Verbindung 9, Tabelle 1

26.6 g Chinolin werden in 110 ml Acetonitril gelöst. Nach Abkühlen auf -20°C werden 15.7 g Acetylchlorid zugetropft, und es wird 90 min bei -20°C gerührt. Anschlielßend werden 43.8 g Triisopropj,lphosphii so zugetropft, daß die Temperatur unter 3°C bleibt. Nach 3 h Rühren bei Raumtemperatur wird das Lösungsmittel abgezogen und der Rückstand in 100 ml Toluol gelöst. Die Lösung wird nacheinander mit 0.5 N HCl, 0.5 N NaOH und Wasser gewaschen. Nach Trocknen über MgSO₄ und Abziehen des Lösungsmittels erhält man 63.1 g der Verbindung 9 in Form eines rötlichen, harzigen Öls. Die Massenspektroskopie ergibt ein Mutterion M⁺ mit einer Molmasse von 337.1.

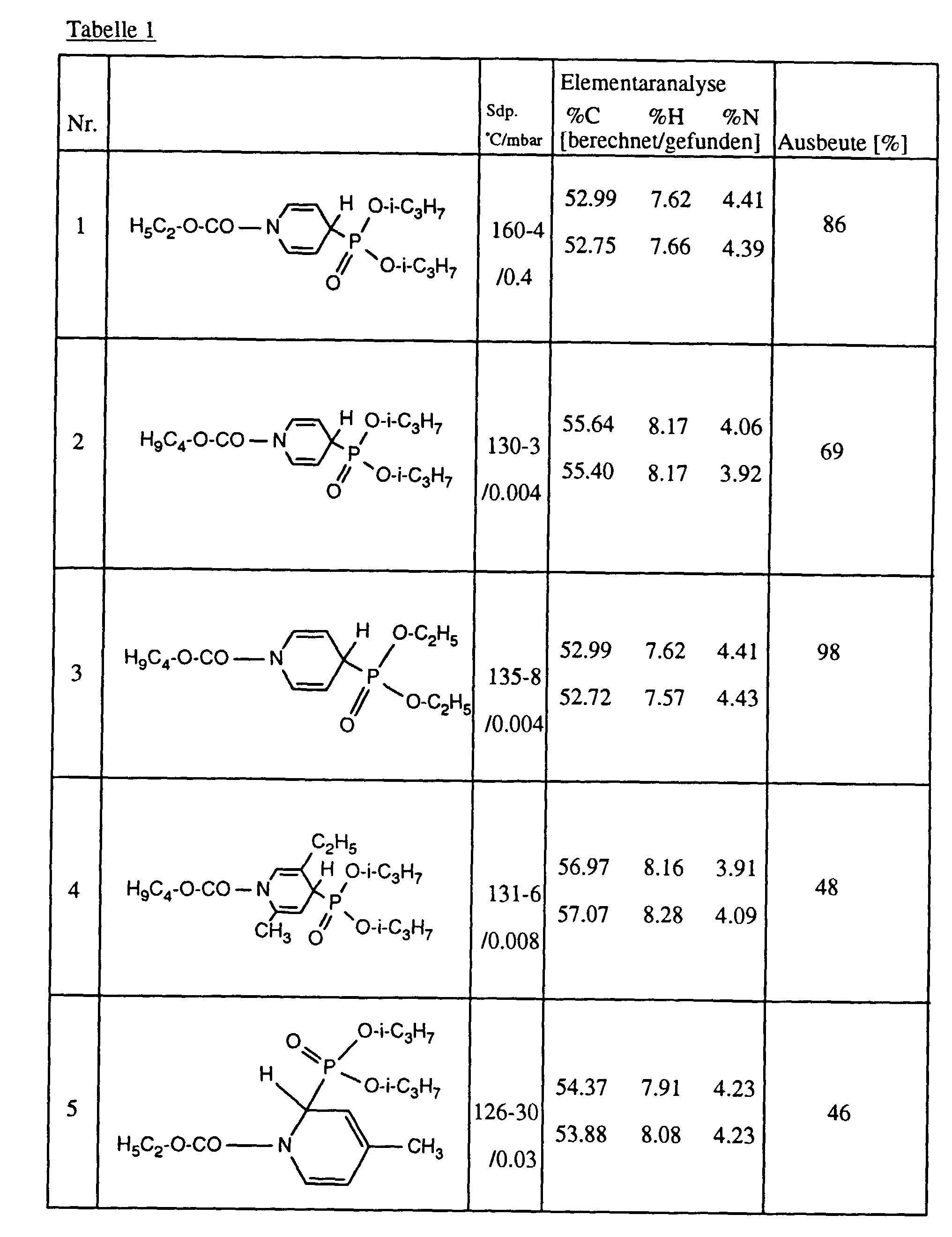

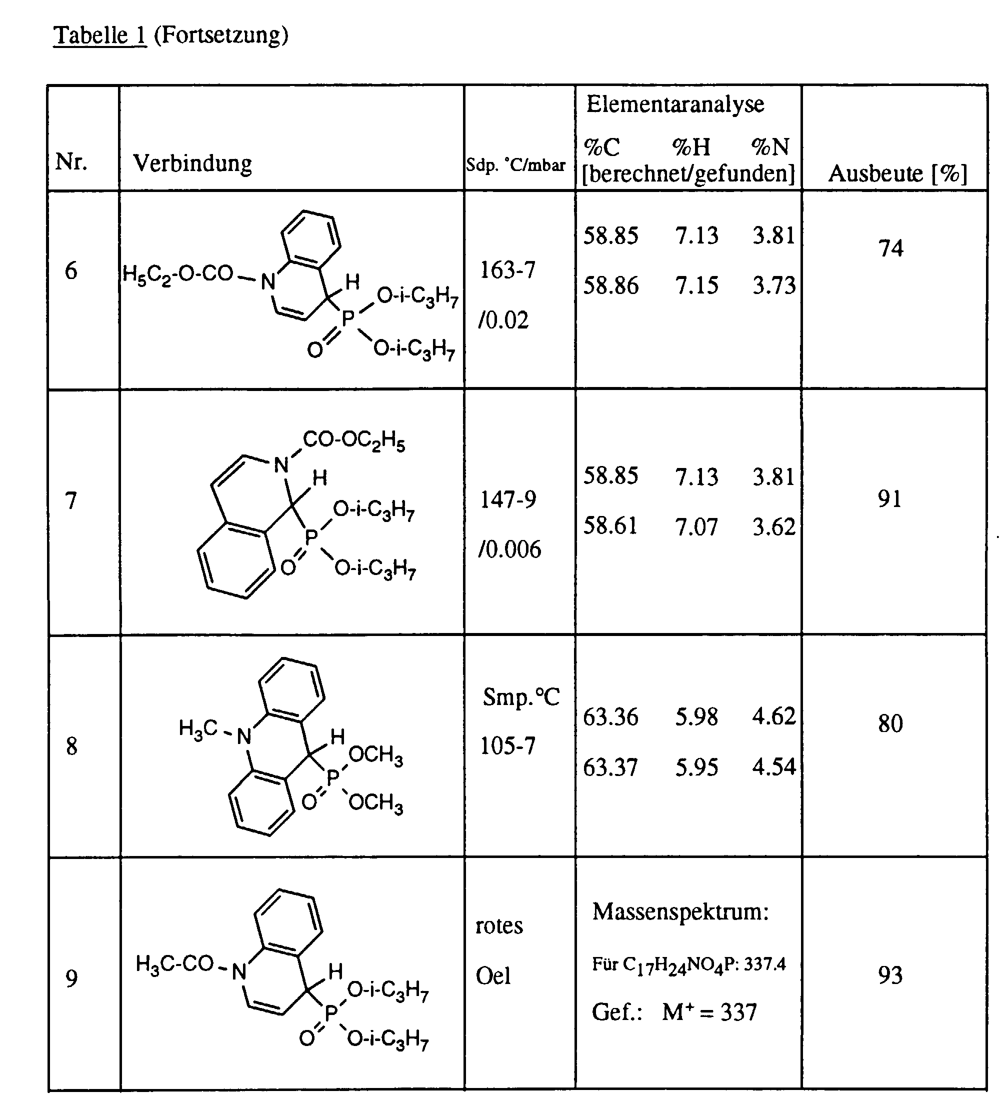

### Beispiel 10: Test auf Stabilisierung eines Schmieröls gegen oxidativen Abbau

Einer Probe eines schwefel- und aromatenfreien, hydrierten Mineralöls, das 0.05% Korrosionsinhibitor Reocor 12® (Ciba Geigy) und 0.04% Metalldesaktivator Reomet 39® (Ciba Geigy) enthält, wird die zu prüfende Verbindung in den in Tabelle 2 angegebenen Mengen zugemischt. Die Ölprobe wird dann dem IP 48/80-Oxidationstest (British Standard BS 4704: 9171) unterzogen. Es werden der Viskositätsanstieg (gemäß ASTM D 445) und die Säurezahl (gemäß ASTM D 664) bestimmt. Je geringer die erhaltenen Werte sind, desto besser ist die stabilisierende Wirkung des Additivs. Die Resultate sind in Tabelle 2 zusammengefaßt.

**Tabelle 2**

| Verbindung Nr. | Konzentration (%) | Viskositätsanstieg (%) | Säurezahl (mg KOH/g) |
|---|---|---|---|
| 1 | 0.5 | 192 | 6.9 |
| | | | |
| 3 | 0.5 | 403 | 12.5 |
| | | | |
| 4 | 0.5 | 324 | 11.1 |
| | | | |
| 5 | 0.5 | 395 | 10.9 |
| | | | |
| 6 | 0.5 | 259 | 9.4 |
| | | | |
| 7 | 0.5 | 248 | 9.5 |
| | | | |
| 9 | 0.5 | 344 | 12.5 |
| | | | |
| 1 | 0.4 | | |
| + A* | 0.1 | 172 | 7.6 |
| | | | |
| 6 | 0.4 | | |
| + A* | 0.1 | 210 | 9.2 |
| | | | |
| -- | -- | >2000 | >20 |

| | | | |
|---|---|---|---|
| *) A bedeutet darin Tetra[β-(3,5-di-tert.-butyl-4-hydroxyphenyl)propionsäurepentaerythritester (Irganox® 1010) | | | |

### Beispiel 11: Test auf Stabilisierung von Polypropylen bei Mehrfachextrusion

1.3 kg Polypropylenpulver (Schmelzindex 3.2 g/10 min., gemessen bei 230°C mit 2,16 kg) werden mit 0.05% Calziumstearat, 0.05% Irganox® 1010 und 0.05% der Verbindung aus Beispiel 1 bzw. 8 vermischt. Diese Mischung wird in einem Extruder mit einem Zylinderdurchmesser von 20 mm und einer Länge von 400 mm mit 100 U/min extrudiert, wobei die drei Heizzonen auf die folgenden Temperaturen eingestellt werden: 260°C, 270°C und 280°C. Das Extrudat wird zur Kühlung durch ein Wasserbad gezogen und anschließend granuliert. Nach zwei weiteren, in gleicher Weise verlaufenden Extrusionen wird der Schmelzindex gemessen (bei 230°C mit 2,16 kg). Große Zunahme des Schmelzindex bedeutet starken Kettenabbau, also schlechte Stabilisierung. Die Ergebnisse sind in Tabelle 3 zusammengefaßt:

**Tabelle 3**

| Verbindung aus Beispiel | Schmelzindex |
|---|---|
| 1 | 8.5 |
| | |
| 8 | 10.5 |
| | |
| ohne Additiv | 15.6 |

## Patentansprüche

1. Zusammensetzungen enthaltend
A) ein gegen lichtinduzierten, thermischen oder /und oxidativen Abbau empfindliches organisches Material ausgewählt aus natürlichen, halbsynthetischen oder synthetischen Polymeren, Schmierstoffen, Metallbearbeitungsflüssigkeiten oder Hydraulikflüssigkeiten und
B) mindestens eine Verbindung der Formel I oder/und II 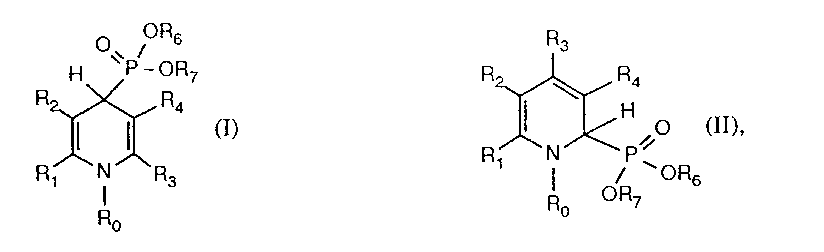 worin
R₀ Wasserstoff, C₁-C₁₂-Alkyl, C₅-C₁₂-Cycloalkyl, C₂-C₁₂-Alkenyl, Phenyl-C₁-C₄-alkyl, -CO-R₅ oder -CO-OR₅ ist,
R₁ Wasserstoff, Methyl Ethyl oder zusammen mit 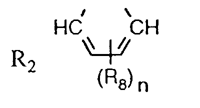 bedeutet,
R₂ Wasserstoff, Methyl, Ethyl oder zusammen mit 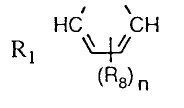 ist,
R₃ Wasserstoff, Methyl, Ethyl oder zusammen mit 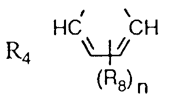 bedeutet,
R₄ Wasserstoff, Methyl, Ethyl oder zusammen mit 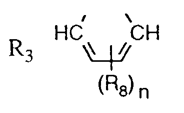 ist,
R₅ C₁-C₁₈-Alkyl, C₅-C₁₂-Cycloalkyl, Phenyl-C₁-C₄-Alkyl oder Phenyl ist,
R₆ und R₇ unabhängig voneinander Wasserstoff, C₁-C₁₂-Alkyl, C₅-C₁₂-Cycloalkyl, Phenyl oder Phenyl-C₁-C₄-alkyl bedeuten,
R₈ C₁-C₄-Alkyl ist und
n für 0, 1 oder 2 steht, mit der Massgabe, dass in Formel II R₃ nicht für Wasserstoff steht.

2. Zusammensetzungen nach Anspruch 1, worin in Formel II R₁ und R₂ unabhängig voneinander Wasserstoff, Methyl oder Ethyl sind.

3. Zusammensetzungen nach Anspruch 1, worin in Formel II R₁ und R₂ Wasserstoff sind, R₃ Methyl oder Ethyl ist und R₄ Wasserstoff, Methyl oder Ethyl ist oder R₃ und R₄ zusammen 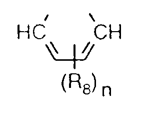 bedeuten

4. Zusammensetzungen nach Anspruch 1, worin in einer Gruppe der Formel 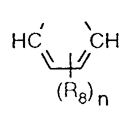 n 0 ist.

5. Zusammensetzungen nach Anspruch 1, worin R₆ und R₇ C₁-C₆-Alkyl, Cyclohexyl, Phenyl oder Benzyl sind.

6. Zusammensetzungen nach Anspruch 1, worin R₀ C₁-C₄-Alkyl, -CO-R₅ oder -CO-OR₅ ist,
R₁, R₂, R₃ und R₄ unabhängig voneinander Wasserstoff, Methyl oder Ethyl oder R₁ und
R₂ beziehungsweise R₃ und R₄ jeweils zusammen 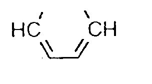 bedeuten, oder in Formel II
R₁ und R₂ Wasserstoff, Methyl oder Ethyl und R₃ Methyl oder Ethyl und R₄ Wasserstoff, Methyl oder Ethyl oder R₃ und R₄ zusammen 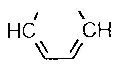 bedeuten,
R₅ C₁-C₄-Alkyl ist, und
R₅ und R₇ unabhängig voneinander C₁-C₄-Alkyl, bedeuten.

7. Zusammensetzungen nach Anspruch 1, worin die Komponente B) mindestens eine Verbindung der Formel I ist.

8. Zusammensetzungen nach Anspruch 1, worin das natürliche, halbsynthetische oder synthetische Polymer ein thermoplastischer Kunststoff oder ein Elastomer ist, vor allem ein Polyolefin ist.

9. Verwendung von Verbindungen der Formel I oder/und II gemäß Anspruch 1 zum Stabilisieren von gegen oxidativen, thermischen und/oder actinischen Abbau empfindlichem organischen Material.

10. Verwendung nach Anspruch 9 zum Stabilisieren von natürlichen, halbsynthetischen oder synthetischen Polymeren oder von Schmierstoffen, Metallbearbeitungs- oder Hydraulikflüssigkeiten,

11. Verwendung nach Anspruch 9 zum Stabilisieren von thermoplastischen Polymeren oder Elastomeren, insbesondere von Polyolefinen.

12. Verfahren zum Stabilisieren von organischen Material ausgewählt aus natürlichen, halbsynthetischen oder synthetischen Polymeren oder Schmierstoffen, Metallbearbeitungs- oder Hydraulikflüssigkeiten gegen oxidativen, thermischen und/oder actinischen Abbau, dadurch gekennzeichnet, daß man diesen als Stabilisatoren Verbindungen der Formel I oder/und II zusetzt bzw. auf diese aufbringt.

13. Verfahren nach Anspruch 14 zum Stabilisieren von thermoplastischen Polymeren, Elastomeren oder von Schmierstoffen, Metallbearbeitungs- oder Hydraulikflüssigkeiten.

## Claims

1. A composition comprising
A) an organic material which is susceptible to thermal, oxidative and/or light-induced degradation and is selected from natural, semi-synthetic polymers, lubricants, metalworking fluids or hydraulic fluids, and
B) at least one compound of formula I and/or II, 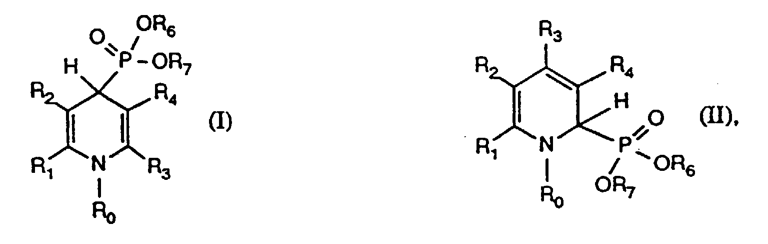 wherein
R₀ is hydrogen, C₁-C₁₂alkyl, C₅-C₁₂cycloalkyl, C₂-C₁₂alkenyl, phenyl-C₁-C₄alkyl, -CO-R₅ or -CO-OR₅,
R₁ is hydrogen, methyl, ethyl or together with 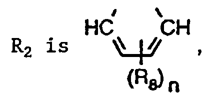
R₂ is hydrogen, methyl, ethyl or together with 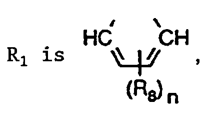
R₃ is hydrogen, methyl, ethyl or together with 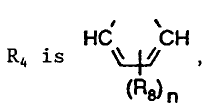
R₄ is hydrogen, methyl, ethyl or together with 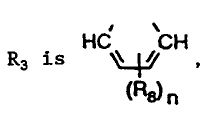
R₅ is C₁-C₁₈alkyl, C₅-C₁₂cycloalkyl, phenyl-C₁-C₄alkyl or phenyl,
R₆ and R₇ are each independently of the other hydrogen, C₁-C₁₂alkyl, C₅-C₁₂cycloalyl, phenyl or phenyl-C₁-C₄alkyl,
R₈ is C₁-C₄alkyl, and
n is 0, 1 or 2, with the proviso that, in formula II, R₃ is not hydrogen.

2. A composition according to claim 1, wherein R₁ and R₂ in formula II are each independently of the other hydrogen, methyl or ethyl.

3. A composition according to claim 1, wherein in formula II R₁ and R₂ are hydrogen, R₃ is methyl or ethyl and R₄ is hydrogen, methyl or ethyl, or R₃ and R₄ together are

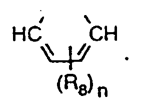

4. A composition according to claim 1, wherein n is 0 in a group of formula

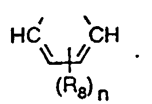

5. A composition according to claim 1, wherein R₆ and R₇ are C₁-C₆alkyl, cyclohexyl, phenyl or benzyl.

6. A composition according to claim 1, wherein R₀ is C₁-C₄alkyl, -CO-R₅ or -CO-OR₅, R₁, R₂, R₃ and R₄ are each independently of the other hydrogen, methyl or ethyl, or R₁ and R₂ or R₃ and R₄ are each together 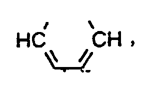 or in formula II, R₁ and R₂ are hydrogen, methyl or ethyl and
R₃ is methyl or ethyl and R₄ is hydrogen, methyl or ethyl, or R₃ and R₄ together are 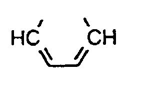
R₅ is C₁-C₄alkyl, and
R₆ and R₇ are each independently of the other C₁-C₄alkyl.

7. A composition according to claim 1, wherein component B) is at least one compound of formula I.

8. A composition according to claim 1, wherein the natural, semi-synthetic or synthetic polymer is a thermoplastic polymer or an elastomer, preferably a polyolefin.

9. The use of compounds of the formula I and/or II according to claim 1 for stabilising organic material which is susceptible to oxidative, thermal and/or actinic degradation.

10. The use according to claim 9 for stabilising natural, semi-synthetic or synthetic polymers or lubricants, metalworking fluids or hydraulic fluids.

11. The use according to claim 9 for stabilising thermoplastic polymers or elastomers, especially polyolefins.

12. A process for stabilising organic material selected from natural, semi-synthetic or synthetic polymers, lubricants, metalworking fluids or hydraulic fluids against oxidative, thermal and/or actinic degradation, which comprises adding or applying thereto compounds of formula I and/or II as stabilisers.

13. A process according to claim 12 for stabilising thermoplastic polymers, elastomers or lubricants, metalworking fluids or hydraulic fluids.

## Revendications

1. Compositions contenant :
A) une matière organique sensible à la dégradation induite par la chaleur, par l'oxydation ou par la lumière pris dans le groupe des polymères naturels, semi-synthétiques ou synthétiques, des lubrifiants, des fluides de travail des métaux et des fluides hydrauliques et
B) au moins un composé de formules I ou/et II, 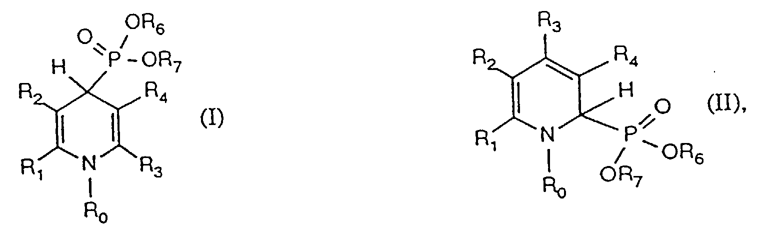 dans lesquelles
R₀ représente l'hydrogène, alkyle en C₁- C₁₂, cycloalkyle en C₅-C₁₂, alcényle en C₂-C₁₂, phényle, alkyle en C₁-C₄, -CO-R₅ ou -CO-OR₅,
R₁ représente l'hydrogène, méthyle, éthyle ou ensemble avec 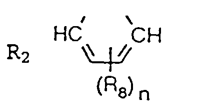
R₂ représente l'hydrogène, méthyle, éthyle ou ensemble avec 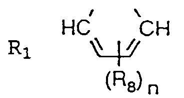
R₃ représente l'hydrogène, méthyle, éthyle ou ensemble avec 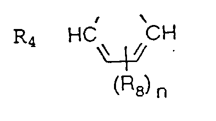
R4 représente l'hydrogène, méthyle, éthyle ou ensemble avec 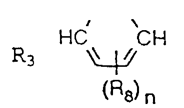
R₅ représente alkyle en C₁-C₁₈, cycloalkyle en C₅-C₁₂, phényle, alkyle en C₁-C₄ ou phényle,
R₆ et R₇, indépendamment l'un de l'autre, représentent l'hydrogène, alkyle en C₁-C₁₂, cycloalkyle en C₅-C₁₂, phényle ou phénylalkyle en C₁-C₄,
R₈ représente alkyle en C₁-C₄,et
n vaut 0, 1 ou 2.

2. Compositions selon la revendication 1, où dans la formule II R₁ et R₂, indépendamment l'un de l'autre, représentent l'hydrogène, méthyle ou éthyle.

3. Compositions selon la revendication 1, où dans la formule II R₁ et R₂ sont l'hydrogène, R₃ méthyle ou éthyle et R₄ l'hydrogène, méthyle ou éthyle, ou R₃ et R₄ ensemble représentent

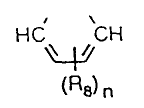

4. Compositions selon la revendication 1, dans laquelle dans un groupe de formule 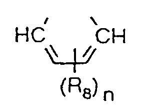 n vaut 0.

5. Compositions selon la revendication 1, où R₆ et R₇ représentent alkyle en C₁-C₆, cyclohexyle, phényle ou benzyle.

6. Compositions selon la revendication 1, où R₀ représente alkyle en C₁-C₄, -CO-R₅ ou -CO-OR₅,
R₁, R₂, R₃ et R₄, indépendamment les uns des autres, sont l'hydrogène, méthyle ou éthyle, ou R₁ et R₂, respectivement R₃ et R₄, chaque fois ensemble, représentent 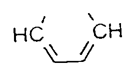 ou dans la formule II R₁ et R₂ représentent l'hydrogène, méthyle ou éthyle et R₃ représente méthyle ou éthyle et R₄ l'hydrogène, méthyle ou éthyle ou R₃ et R₄ ensemble représentent 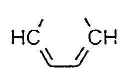
R₅ représente alkyle en C₁-C₄ et
R₆ et R₇, indépendamment l'un de l'autre, représente alkyle en C₁-C₄.

7. Compositions selon la revendication 1, où le constituant B est au moins un composé de formule I.

8. Compositions selon la revendication 1, où le polymère naturel, semi-synthétique ou synthétique est une matière plastique thermoplastique ou un élastomère, avant tout une polyoléfine.

9. Utilisation des composés de formules I ou/et II selon la revendication 1 pour la stabilisation de la matière organique sensible contre la dégradation induite par oxydation, par la chaleur ou par la lumière actinique.

10. Utilisation selon la revendication 9, pour la stabilisation de polymères naturels, semi-synthétiques ou synthétiques ou de lubrifiants, de fluides de travail de métaux ou hydrauliques.

11. Utilisation selon la revendication 9, pour la stabilisation de polymères thermoplastiques ou d'élastomères, plus particulièrement de polyoléfines.

12. Procédé pour la stabilisation de matières organiques choisies parmi les polymères naturels, semi-synthétiques ou synthétiques ou les lubrifiants, les fluides de travail de métaux ou hydrauliques, contre la dégradation induite par oxydation, par la chaleur et/ou par la lumière actinique, caractérisé en ce qu'on leur ajoute, respectivement en ce que l'on dépose sur celles-ci, en tant que stabilisants, les composés de formules I ou/et II.

13. Procédé selon la revendication 12, pour la stabilisation de polymères thermoplastiques, d'élastomères ou de lubrifiants, de fluides de travail des métaux ou hydrauliques.
